Europäisches Patentamt

European Patent Office

Office européen des brevets

(11) Veröffentlichungsnummer: **0 141 033**
**A2**

(12) # EUROPÄISCHE PATENTANMELDUNG

(21) Anmeldenummer: **84107849.6**

(22) Anmeldetag: **05.07.84**

(51) Int. Cl.⁴: **G 01 N 27/12**

(30) Priorität: **30.08.83 CH 4738/83**

(43) Veröffentlichungstag der Anmeldung:
**15.05.85 Patentblatt 85/20**

(84) Benannte Vertragsstaaten:
**CH DE FR GB LI**

(71) Anmelder: **CERBERUS AG**
**Alte Landstrasse 411**
**CH-8708 Männedorf(CH)**

(72) Erfinder: **Forster, Martin, Dr. sc. nat. ETH**
**Sonnenbergstrasse 16**
**CH-8645 Jona(CH)**

(74) Vertreter: **Tiemann, Ulrich, Dr.-Ing. et al,**
**c/o Cerberus AG Patentabteilung Alte Landstrasse 411**
**CH-8708 Männedorf(CH)**

(54) **Verfahren zur Herstellung von Materialien für Gassensoren.**

(57) Neue Materialien für Gassensoren, die gasförmige Verunreinigungen in Luft feststellen können und die Metalloxide mit Katalysatorzusätzen enthalten, werden hergestellt indem eine kolloidale Lösung A mindestens eines Metalloxids oder Metallhydroxids eines Metalles aus einer der Gruppen Ib, IIa, IIb, IIIa, IIIb, IVa, IVb, Va, Vb, VIa, VIb, VIIb, VIII des Periodensystems und den Lanthaniden und Aktiniden mit einer Lösung B, die mindestens ein Salz oder eine Komplexverbindung der Metalle Lanthan, Chrom, Magnan, Eisen, Kobalt, Nickel, Kupfer, Ruthenium, Iridium, Palladium, Platin, Rhodium, Osmium, Silber, Gold, Antimon, Wismut oder Thorium enthält, vermischt und das erhaltene Gemisch zur photochemischen Abscheidung des Metalls in feinverteilter Form auf dem Metalloxid bzw. Metallhydroxid mit Licht im sichtbaren und ultravioletten Spektralbereich bestrahlt wird. Die so erhaltene Lösung C wird ohne wesentliche Aenderung der Grösse der kolloidalen Partikeln aus Metalloxid bzw. Metallhydroxid zu einem Festkörper D verarbeitet, der anschliessend bei einer Temperatur getrocknet wird, die höchstens 700°C, insbesondere höchstens 500°C und vorzugsweise höchstens 300°C, über der vorgesehenen Betriebstemperatur des Gassensors liegt.

## Verfahren zur Herstellung von Materialien für Gassensoren

Die Erfindung betrifft ein Verfahren zur Herstellung von Materialien für Gassensoren, die aus Metalloxiden mit Katalysatorzusätzen bestehen.

Solche Materialien und Verfahren zu ihrer Herstellung sind bekannt. Bereits seit langem ist bekannt, dass n-Halbleiter aus Metalloxiden auf ihrer Oberfläche reduzierende oder oxidierende Gase adsorbieren, so dass eine Aenderung des elektrischen Widerstandes auftritt. Zur Erhöhung der Empfindlichkeit gegenüber reduzierenden oder oxidierenden Gasen wurden den Metalloxiden bestimmte Katalysatoren zugesetzt. So ist beispielsweise aus der DE-PS 2 428 488 ein Verfahren zur Herstellung eines Materials für Gassensoren bekannt, welches Zinndioxid als Grundmaterial und Platin als Katalysator enthält. Als Katalysatoren kommen weiterhin Palladium als metallischer Katalysator oder Kupfer(II)-oxid oder Nickel(II)-oxid als Metalloxid-Katalysatoren in Frage.

Nach den bekannten Methoden erfolgt die Dotierung des Grundmaterials ausschliesslich durch Tränken des Metalloxidpulvers mit der Lösung eines Edelmetallsalzes (z.B. $H_2PtCl_6$ oder $Na_2PdCl_4$), bzw. eines Kupfer- oder Nickelsalzes (z.B. $CuCl_2$ oder $Ni(NO_3)_2$), anschliessendem Trocknen und Ausheizen. Beim Ausheizen zersetzt sich das beim Trocknen in kleinen Kriställchen abgeschiedene Metallsalz und hinterlässt das Edelmetall Platin oder Palladium in metallischer Form bzw. das Kupfer bzw. Nickel in Form des Metalloxids. Die Körner des Metalls bzw. Metalloxids weisen im allgemeinen einen mittleren Durchmesser von 10 bis 500 nm auf. Die örtliche Verteilung der Körner ist aber nicht homogen, da beim Eintrocknen der Lösung auf dem Metalloxidpulver starke örtliche Konzentrationsunterschiede auftreten.

Aus diesem Metalloxidpulver hergestellte Gassensoren haben deshalb eine von Sensor zu Sensor stark unterschiedliche Empfindlichkeit. Weiterhin hat dieses Verfahren den Nachteil, dass die Anionen des Metallsalzes oder Metallkomplexes (z.B. Chlorid- bzw. Nitrationen) sich an Fehlstellen des Metalloxids festsetzen und die Leitfähigkeit des Metalloxidpulvers in unkontrollierbarer Weise beeinflussen. Dies führt wiederum zu Schwankungen in der Empfindlichkeit der einzelnen Sensoren.

Um wenigstens den zuletzt genannten Effekt teilweise abzuschwächen, wurden die Metalloxide während der Herstellung auf Temperaturen von mindestens 600 bis 1000°C erwärmt, um die genannten Anionen auszutreiben. Bei derartig hohen Temperaturen sintern aber die Metalloxide stark zusammen und haben dann nur noch eine geringe Porosität. Dadurch wird die allgemeine Empfindlichkeit des Gassensors stark herabgesetzt.

Aus der US-PS 4 362 765 ist ein Verfahren zur Herstellung von Gassensoren bekannt, bei dem ein Gemisch von Metall mit seinem Oxid bei vermindertem Druck in einer sauerstoffhaltigen Atmosphäre verdampft wird, wodurch eine Schicht aus Teilchen mit einem mittleren Durchmesser von 1 bis einigen zig Nanometern auf einem mit Elektroden versehenen isolierenden Material erhalten wird. Das nach diesem Verfahren erhaltene Material für Gassensoren weist aber nur eine geringe mechanische Festigkeit auf und will man dem Oxidmaterial beispielsweise Palladium als Katalysator zusetzen, so kann es nicht homogen in dem beispielsweise aus Zinndioxid bestehenden Material verteilt werden, sondern es muss in mehreren, separaten Schichten abgelagert werden.

Die photochemische Abscheidung von Metallen auf Metalloxidpulvern ist beschrieben in U.S. Patent 4 264 421 und wird
zur Herstellung von Katalysatorpulvern verwendet. Jenes Verfahren benötigt für eine effektive Metallabscheidung Acetationen und eine Reaktionstemperatur von bis zu 60°C.

Das weiter unten beschriebene erfindungsgemässe Verfahren
unterscheidet sich aber grundsätzlich vom U.S. Patent
4 264 421:

Anstelle eines Metalloxidpulvers, das in einer Lösung suspendiert wird, wird beim erfindungsgemässen Verfahren eine kolloidale Lösung von Metalloxiden, Metalloxidhydraten oder
Metallhydroxiden verwendet, die mit einer Metallsalzlösung
vermischt und dann bestrahlt wird.

Die photochemische Reaktion wird bei Raumtemperatur oder sogar noch darunter ausgeführt. Dies verhindert, dass die bestrahlte kolloidale Lösung koaguliert. Die nach dem U.S. Patent 4 264 421 für die effiziente Photoreaktion notwendigen
Acetationen bringen kolloidale Lösungen zum Koagulieren.

Zur Beschleunigung der photochemischen Reaktion werden deshalb im weiter unten beschriebenen erfindungsgemässen Verfahren keine Acetationen, sondern Alkohole, Ketone oder sonstige
Reduktionsmittel zugesetzt, die bei der Oxidation keine ionischen Produkte liefern oder die Wasserstoffionenkonzentration
der Lösung nicht so stark ändern, dass die bestrahlte kolloidale Lösung koagulieren würde.

Nach dem Bestrahlen der Mischung mit ultraviolettem oder
sichtbarem Licht liegt beim erfindungsgemässen Verfahren
keine Suspension vor wie im Patent U.S. 4 264 421 sondern
eine echt kolloidale Lösung. Diese Lösung kann über einen
Festkörper zu grossen Stücken von Metalloxidgelen verarbeitet
werden. Wenn man von einer Metalloxidsuspension ausgeht, wie es im Patent US 4 264 421 beschrieben ist, können unter keinen Umständen solche Gelstücke erhalten werden, die für die Herstellung dieser ausserordentlich empfindlichen Gassensoren notwendig sind. Andererseits kann Lösung lyophilisiert werden, was den Festkörper in Form eines feinen Pulvers liefert. Dieses Pulver besteht aus den kolloidalen Teilchen der bestrahlten Lösung, die einen viel kleineren Durchmesser besitzen als die Metalloxidkörner, die im Patent U.S. 4 264 421 eingesetzt werden. Nur mit diesen äusserst kleinen Metalloxidpartikeln können aber letztendlich die hier beschriebenen, in ihrer Qualität einmaligen Gassensoren hergestellt werden.

Weiterhin werden im Gegensatz zum U.S. Patent 4 264 421 die Gemische beim Bestrahlen mit Licht nicht farblos sondern im allgemeinen tiefschwarz. Dies rührt daher, dass das ausgeschiedene Metall äusserst fein verteilt ist und sich äusserst fein auf den kolloidalen Metalloxidpartikeln abscheidet.

Die Erfindung hat sich die Aufgabe gestellt, die Nachteile der bisherigen Materialien für Gassensoren zu beseitigen, insbesondere ein Material für Gassensoren zu schaffen, das es ermöglicht, Gassensoren mit gleichmässiger Empfindlichkeit herzustellen. Der Erfindung liegt ferner die Aufgabe zu Grunde, die durch die Ablagerung von Anionen an Fehlstellen des Metalloxids verursachten unterschiedlichen Leitfähigkeiten der Metalloxid-Gassensoren zu beseitigen. Ferner soll das Erhitzen während der Herstellung der Metalloxid-Materialien vermieden oder soweit verringert werden, dass die Herabsetzung der Empfindlichkeit durch Verringerung der Porosität bei der Trocknung vermieden wird. Ferner sollen Gassensormaterialien mit erhöhter Allgemeinempfindlichkeit erhalten werden, damit die Gassensoren bei Zimmertemperatur oder geringfügig erhöhter Temperatur betrieben werden können, um den Stromverbrauch der Gasmeldeanlagen zu verringern.

Diese Aufgabe wird erfindungsgemäss durch die im kennzeichnenden Teil des Patentanspruchs 1 definierten Merkmale gelöst. Bevorzugte Ausführungsformen bzw. weitere Ausgestaltungen des erfindungsgemässen Verfahrens sind in abhängigen Patentansprüchen definiert.

Gemäss einer bevorzugten Ausführungsform des erfindungsgemässen Verfahrens wird aus der Lösung C durch eine äusserst schonende Behandlung, z.B. durch teilweises Eintrocknen des Lösungsmittels oder durch Lyophilisation, ein Festkörper D erzeugt. Dieser Festkörper D enthält die anfänglich in Lösung A erzeugten, photochemisch mit Metall versehenen, kolloidalen Metalloxid- beziehungsweise Metallhydroxid- oder Metalloxidhydratpartikeln in ihrer ursprünglichen, nicht wesentlich veränderten Grösse, die im Bereich von 0.5 nm bis 500 nm liegt. Dieser Festkörper D wird in den weitern Prozessschritten, die letztendlich zum fertigen Gassensor führen, nur solchen Temperaturen ausgesetzt, die höchstens 700°C, insbesondere nur 500 °C und bevorzugt höchstens 300°C über der späteren Betriebstemperatur des Gassensors liegen.
Der Festkörper D, der zum Beispiel als ein mit Lösungsmittel
getränktes Gelstück, das mit Metall beladenes Metalloxid,
Metallhydroxid oder Metalloxidhydrat enthält, erhalten wird,
kann durch schonendes Trocknen in ein Metalloxidxerogel überführt werden.

Nach einer andern Variante des erfindungsgemässen Verfahrens
kann aus der Lösung C auch ein hochporöses Metalloxidaerogel
erhalten werden, indem die Lösung C durch teilweise Trocknung
in ein Wasser enthaltendes Gelstück - den Festkörper D -
übergeführt wird, indem das Wasser durch ein nichtwässeriges
Lösungsmittel ersetzt wird und das Gelstück dann unter einem
für das Lösungsmittel überkritischen Druck auf eine Temperatur gebracht wird, die über der kritischen Temperatur des
Lösungsmittels liegt. Nach einiger Zeit wird dann der Druck
auf Normaldruck und darauf die Temperatur auf Zimmertemperatur gesenkt. Nach einer weitern Variante des erfindungsgemässen Verfahrens kann auch ein Metalloxidaerogel erhalten werden, in dem die Lösung C, die hauptsächlich nichtwässerige
Lösungsmittel enthält, geliert wird und dann die Lösungs
mittel wie oben beschrieben durch Trocknung bei überkritischer Temperatur und überkritischem Druck entfernt werden.

Ein ausgezeichnetes Gassensormaterial wird ebenfalls erhalten, wenn in einer weitern Variante des erfindungsgemässen
Verfahrens die Lösung C, die hauptsächlich nichtwässerige
Lösungsmittel enthält, durch teilweise Trocknung in einen
Festkörper D in Form eines Metalloxidgels, Metallhydroxilgels
oder Metalloxidhydratgels übergeführt wird und dieser Festkörper D dann unter Normaldruck bei einer Temperatur, die
maximal 700°C, insbesondere 500 °C und bevorzugt höchstens
300°C über der späteren Betriebstemperatur des Gassensors getrocknet wird. Dieses Gassensormaterial, das ein Metalloxidxerogel darstellt, sowie die Metalloxidxerogele oder Metalloxidaerogele, die nach den oben beschriebenen anderen
Varianten des erfindungsgemässen Verfahrens hergestellt worden sind, haben vorzugsweise die Form einer runden Platte
von ca. 0,1 bis 2 mm Dicke und einem Durchmesser bis zu
einigen Zentimetern. Je nachdem in welche Form die Lösung
C gegossen wird, können aber beliebige Formen des Festkörpers
D erhalten werden, z.B. Würfel, Quader, Stäbe, Rohre etc.
mit äusseren Abmessungen bis zu mehreren Zentimetern oder
Dezimetern.

Gemäss einer bevorzugten Ausführungsform des erfindungsgemässen Verfahrens wird eine kolloidale Lösung A mindestens
eines Oxids oder Hydroxids von Beryllium, Magnesium, Calcium
Strontium, Barium, Lanthan, Cer, Thorium, Titan, Zirkon, Vanadin, Niob, Tantal, Chrom, Molybdän, Wolfram, Mangan, Eisen,
Kobalt, Nickel, Kupfer, Silber, Zink, Cadmium, Aluminium,
Indium, Silicium, Germanium, Zinn, Blei, Antimon oder Wismut
als Ausgangsmaterial verwendet.

Die für die Durchführung des erfindungsgemässen Verfahrens
erforderliche Lösung A des kolloidalen Metalloxids, Metalloxidhydrats, bzw. Metallhydroxids kann entweder durch Hydrolyse eines Metallsalzes, d.h. durch eine Veränderung der Wasserstoffionenkonzentration, hergestellt werden oder indem
ein Metallalkoholat in einem nichtwässerigen Lösungsmittel
durch Wasserzugabe hydrolysiert wird. In einem bevorzugten
Verfahrensschritt wird vorgängig zur Hydrolyse des Metallsalzes, beziehungsweise des Metallalkoholates ein Chelatbildner zugesetzt; dadurch wird ein Produkt mit noch kleinerer
Partikelgrösse erhalten.

Gemäss einer weiteren bevorzugten Ausführungsform des erfindungsgemässen Verfahrens wird eine kolloidale Lösung A mindestens eines Oxids oder Hydroxids von Magnesium, Lanthan, Cer, Titan, Zirkon, Vanadin, Chrom, Eisen, Kobalt, Nickel, Kupfer, Zink, Aluminium, Indium, Antimon oder Zinn mit einer Lösung B eines Chlorids, Nitrats, Sulfats, Acetats, Formiats, Acetylacetonats oder Salicylats mindestens eines der Metalle Lanthan, Chrom, Mangan, Eisen, Kobalt, Nickel, Kupfer, Ruthenium, Iridium, Palladium, Platin, Rhodium, Osmium, Silber, Gold, Antimon, Wismut oder Thorium vermischt und dann so lange mit Licht bestrahlt, bis mindestens 30%, insbesondere 60% und bevorzugt mindestens 90%, des Metallgehalts der Lösung B als Metall abgeschieden worden sind.

Besonders vorteilhaft ist es, wenn dem Gemisch der kolloidalen Lösung A des Metalloxids bzw. Metallhydroxids mit der Metallsalzlösung B ein Reduktionsmittel zugesetzt wird, welches bei der Photoreaktion eine Aenderung der Wasserstoffionenkonzentration um höchstens drei Zehnerpotenzen bewirkt. Vorzugsweise wird die photochemische Metallabscheidung in Abwesenheit von Luftsauerstoff durchgeführt. Dies kann so erfolgen, dass die Lösung vor der Bestrahlung kurz evakuiert wird und dann während des Bestrahlens unter einem Schutzgas gehalten wird.

Aus dem Gemisch der Lösungen A und B kann Luftsauerstoff auch dadurch entfernt werden, dass das Gemisch vor dem Bestrahlen mit einem Schutzgas gespült wird. Diese Schutzgasatmosphäre wird dann während der Bestrahlung aufrecht erhalten. Als Schutzgase werden vorzugsweise $N_2$, He, Ar, Ne, Kr, Xe, $H_2$, $CO_2$ verwendet. Vorzugsweise kann dem Gemisch der beiden Lösungen A und B vor der Photolyse ein Chelatbildner zugesetzt werden. Als Chelatbildner für diesen Verfahrensschritt und auch zur Herstellung der Lösung A kommen vorzugsweise Oxalsäure, Weinsäure, Zitronensäure, Acetylaceton, Aethylendiamintetraessigsäure, Nitrilotriessigsäure oder Salicylsäure in Frage. Gemäss einer besonders bevorzugten Ausführungsform des erfindungsgemässen Verfahrens wird ein Chelatbildner gewählt, der in der Photoreaktion gleichzeitig als
Reduktionsmittel wirkt.

Besonders günstige Resultate werden erzielt, wenn die Lösung
A und/oder die bestrahlte Lösung C durch Dialyse oder Elektrodialyse weiter gereinigt werden.

Gemäss einer weiteren bevorzugten Ausführungsform des erfindungsgemässen Verfahrens kann die bestrahlte Lösung C lyophilisiert werden. Das erhaltene Pulver wird dann entweder im
Gemisch mit einem Sinterhilfsmittel oder für sich allein auf
ein mit Elektroden versehenes Substrat aufgebracht und aufgesintert. Das erhaltene Pulver kann auch zur Entfernung von
Lösungsmitteln ausgeheizt und dann zu Platten gepresst werden. Zur Erhöhung der Festigkeit kann das lyophilisierte Pulver zur Entfernung von Lösungsmittel ausgeheizt, zu Platten
gepresst und dann mit einer Lösung einer organischen Silicium, Titan-, Aluminium- oder Zinnverbindung getränkt und
zur Entfernung des Lösungsmittels ein zweites Mal ausgeheizt
werden.

Aus diesen Platten, die aus gepresstem Pulver bestehen und
eventuell noch durch Zusätze mechanisch verstärkt worden sind
sowie aus den oben beschriebenen grössern Metalloxidxerogel-
und Metalloxidaerogelkörpern oder -platten werden nun kleinere Stücke in der gewünschten Form herausgetrennt. Falls nötig, können vor dieser Operation auch noch Elektroden aufgebracht werden. Diese Stücke haben Abmessungen von 0,05 mm bis zu einigen Millimetern und werden zu Gassensoren verarbeitet. Selbstverständlich ist es auch möglich, diese kleinen Stücke schon anfänglich zu erzeugen, indem einerseits die Lösung C in geeignete kleine Formen gegossen wird. Um die gewünschten Abmessungen dieser kleinen Stücke zu erhalten, muss allerdings der beim Trocknen der Lösung C auftretende Volumenschwund berücksichtigt werden. Andererseits kann das durch Lyophilisation der Lösung C erhaltene Pulver direkt zu den gewünschten kleinen Stücken gepresst werden.

Nach dem erfindungsgemässen Verfahren wird also ein stabiles Material für Gassensoren erhalten, das gesägt, geschliffen, poliert, geätzt, mit Elektroden versehen und in beliebiger anderer Weise bearbeitet werden kann. Das erhaltene Material weist eine Partikelgrösse von < 1 $\mu$ m für das Metalloxid und von  < 0,5 $\mu$m für den Katalysatorzusatz auf. Das Material ist ausserordentlich homogen, so dass daraus hergestellte Gassensoren spezifische elektrische Leitfähigkeiten und Aenderungen der elektrischen Leitfähigkeit und/oder der optischen Absorption bei Einwirkung von reduzierenden oder oxidierenden Gasen innerhalb ausserordentlich kleiner Toleranzen aufweisen.

Aus den nach dem erfindungsgemässen Verfahren hergestellten Materialien für Gassensoren können neuartige Gassensoren hergestellt werden, die den bisherigen Gassensoren weit überlegen sind. Diese neuen Gassensoren können zum Beispiel bei Zimmertemperatur betrieben werden oder bei Temperaturen, die geringfügig über der Zimmertemperatur liegen. Dadurch kann der Leistungsverbrauch, der bei den alten Gassensoren im Bereich von etwa 1 W liegt, auf einen Wert weit unter 100 mW pro Sensor gesenkt werden.

Die bisher bekannten Gassensoren zeigen eine elektrische
Leitfähigkeit, die proportional zur Quadratwurzel der Konzentration der zu detektierenden Gase ist. Die nach dem erfindungsgemässen Verfahren hergestellten Gassensormaterialien
zeigen demgegenüber innerhalb eines ausserordentlich grossen
Konzentrationsbereich eine elektrische Leitfähigkeit, die
direkt proportional zur Konzentration der zu detektierenden
Gase ist. Dies stellt einen enormen Fortschritt gegenüber
den bekannten Gassensoren dar. Ohne die Erfindung auf diese
Theorie zu beschränken, wird vermutet, dass dies darauf zurückzuführen ist, dass die auf den Metalloxidpartikeln niedergeschlagenen Katalysatorkörner erheblich kleiner und viel
homogener verteilt sind, als bei den bisher bekannten Gassensormaterialien. Mit den herkömmlichen Methoden ist eine
solche Feinheit und Homogenität der Katalysatordotierung
nicht erreichbar. Die Metalloxidpartikeln weisen einen mittleren Durchmesser von 5 bis 10 nm auf, wie sich aus Röntgendiffraktionsmessungen ergibt. Dies liegt etwa eine Zehnerpotenz niedriger als die Teilchengrösse der bisher bekannten
Zinndioxid-Gassensoren, die eine Teilchengrösse von etwa 50
bis 100 nm aufweisen.

Im folgenden werden anhand von Beispielen bevorzugte Ausführungsformen des erfindungsgemässen Verfahrens näher erläutert.

## Allgemeine Beschreibung der Methode

Bei den bisher bekannten Verfahren zur Herstellung von mit Katalysator dotierten Metalloxiden war es üblich, den Katalysatorvorläufer in Form einer Lösung eines Metallsalzes oder Metallkomplexes in das Metalloxid einzubringen. Bei dem erfindungsgemässen Verfahren wird nun ein völlig neues Prinzip zur Abscheidung des Katalysators angewendet. Der Katalysator, ein Metall, wird schon in der kolloidalen Metalloxid-, Metalloxidhydrat- oder Metallhydroxidlösung photochemisch erzeugt.

Dazu wird die kolloidale Metalloxid-, Metallhydroxid- oder Metalloxidhydratlösung A mit einer Lösung B vermischt, die das gewünschte Metall für den Katalysator in Form eines Metallsalzes oder -komplexes enthält. Das Gemisch der beiden Lösungen wird dann mehrere Stunden lang bei Zimmertemperatur mit dem Licht einer Quecksilberdampflampe bestrahlt, wodurch das Metall in äusserst feinverteilter Form auf den kolloidalen Metalloxid-, Metallhydroxid- bzw. Metalloxidhydratteilchen abgeschieden wird. Man erhält somit eine Lösung C, die mindestens ein mit Metall beladenes kolloidales Metalloxid, Metallhydroxid oder Metalloxidhydrat enthält. Diese photochemische Metallabscheidung erfolgt an jedem belichteten Metalloxidteilchen, die Verteilung des Metalls ist also viel feiner als bei den bisher bekannten Katalysator-Dotierungsmethoden für die Herstellung von Materialien für Gassensoren. Die Konzentration der Dotierung mit Katalysatoren kann dadurch gesteuert werden, dass das Vermischungsverhältnis der beiden Lösungen A und B in bestimmter Weise eingestellt wird oder nach der Bestrahlung der Lösung C Lösung A zugefügt wird.

Zur Beschleunigung der photochemischen Metallabscheidung kann das Gemisch der Lösungen A und B zusätzlich Reduktionsmittel, z.B. Alkohole, Ketone etc., enthalten. Das Gemisch kann entweder nur organische oder nur anorganische Lösungsmittel oder aber eine Mischung von organischen mit anorganischen Lösungsmitteln enthalten.

Enthalten die Metallverbindungen der Lösungen A und B anorganische oder organische Ionen, die nur schwierig aus dem erhaltenen Festkörper D entfernt werden können, so wird die nach der Photolyse erhaltene Lösung C durch Dialyse von diesen Ionen befreit. Nötigenfalls kann auch schon die Lösung A dialysiert werden. Statt Dialyse kann auch Elektrodialyse zur Reinigung benutzt werden.

Die erhaltene, gegebenenfalls gereinigte Lösung C, die nur noch kolloidales Metalloxid, Metalloxidhydrat bzw. Metallhydroxid mit darauf niedergeschlagenem Metall enthält, wird in eine Form gegossen, darin teilweise getrocknet und gelieren gelassen, was den Festkörper D liefert, und schliesslich bei einer Temperatur getrocknet, die nicht höher als 700°C, insbesondere höchstens 500°C, bevorzugt höchstens 300°C über der späteren Betriebstemperatur des Gassensors liegt. Die Anwendung dieser Gassensoren ist im CH-Patent (Patent-Gesuch Nr. 4737/83-9) beschrieben.

Die Lösung C kann auch zur Erzeugung des Festkörpers D lyophilisiert werden, wodurch ein äusserst feines Pulver erhalten wird, das in der üblichen Weise durch Pressen in Formen oder durch Aufsintern zu einem Sensorelement mit aufgebrachten Elektroden verarbeitet werden kann. Dadurch werden ebenfalls Sensoren erhalten, die viel empfindlicher auf zu detektierende Gase reagieren als die bisher bekannten Gassensoren.

In Abhängigkeit von ihrer Elektronenaffinität liegt das Metall nach der photochemischen Abscheidung und Trocknung der Gelstücke oder des durch Lyophilisation erhaltenen Pulvers als mehr oder weniger oxidiertes Metall vor.

Beispiel 1:

5,8 g Zinn(IV)-chlorid ($SnCl_4$  5 $H_2O$) wurden in 180 g Wasser gelöst und mit konzentriertem Ammoniakwasser ($NH_4OH$) bei Zimmertemperatur auf einen pH-Wert von 7 gebracht. Der erhaltene Niederschlag von Zinndioxid ($SnO_2$ . x $H_2O$) wurde abfiltriert, mehrmals mit Wasser gewaschen und anschliessend mit einer Lösung von 18 ml konzentriertem Ammoniakwasser in 55 ml Wasser mehrere Stunden lang kräftig verrührt. Die so erhaltene klare, kolloidale Lösung A von $SnO_2$ . x $H_2O$ wurde mehrere Tage lang dialysiert.

32 mg Platin(IV)-chlorwasserstoffsäure ($H_2PtCl_6$ . 5 $H_2O$) wurden in 46 ml Wasser gelöst und mit Soda ($Na_2CO_3$) auf einen pH-Wert von 8,5 gebracht. Diese Lösung B wurde zu der oben erhaltenen kolloidalen Zinndioxid-Lösung A gegeben und zur Beschleunigung der Photoreaktion mit 7 ml Isopropanol als Reduktionsmittel versetzt. Das erhaltene Gemisch wurde unter einer Stickstoffatmosphäre 6 Stunden lang mit dem Licht einer 200-W-Quecksilberhöchstdrucklampe bei einer Temperatur von 20°  3°C bestrahlt. Die erhaltene, tiefschwarze Lösung C wurde mehrere Tage lang dialysiert.

Die erhaltene Lösung wurde in eine Form gegossen und mehrere Tage lang eindunsten gelassen. Die erhaltene, tiefschwarze Gelplatte aus mit Platin dotiertem Zinndioxid wurde innerhalb von neun Stunden langsam auf 300°C erwärmt, 4 Stunden auf dieser Temperatur gehalten und dann wieder auf Zimmertemperatur abgekühlt. Die Platte wurde dann geschliffen und poliert, woraufhin Elektroden auf die Seiten der Platte aufgedampft wurden. Die Platte wurde dann in 1 x 1 x 0,5 mm$^3$ grosse Stücke zersägt. Diese Stücke wurden auf heizbare Substrate aufgebracht und mit Elektroden versehen, wobei Gassensoren erhalten wurden, die bei 50°C äusserst empfindlich auf Kohlenmonoxid reagierten. Die elektrische Leitfähigkeit dieser Sensoren ist direkt proportional zur Kohlenmonoxidkonzentration, was bis jetzt von keinem im Handel erhältlichen Gassensor bekannt ist.

In einem andern Experiment bestand die Lösung B aus 36,4 mg PdCl$_2$, gelöst in 90 ml H$_2$O, die mit NH$_4$OH auf einen pH-Wert von 9 gebracht wurde. Diese Lösung B wurde zur Lösung A gegeben und, wie oben beschrieben, zu einem Gassensor verarbeitet, der n-Butan sehr empfindlich nachweisen konnte.

In einem weitern Experiment wurden als Lösung B 20 ml einer Lösung von 38 mg Cu (NO$_3$)$_2$ . 3H$_2$O in 100 ml H$_2$O, die mit NH$_4$OH auf einen pH-Wert von 10 gebracht worden war, verwendet. Diese Lösung B wurde zur Lösung A gegeben und, wie oben beschrieben, zu einem Gassensor verarbeitet, der Alkoholdampf sehr empfindlich nachweisen konnte.

Beispiel 2:

100 ml einer kolloidalen SnO$_2$ . xH$_2$O Lösung A wurden wie im Beispiel 1 zubereitet. 52 mg RhCl$_3$ . 3 H$_2$O wurden in 20 ml H$_2$O gelöst und mit NH$_4$OH auf eine pH-Wert von 5 gebracht. Diese Lösung B wurde ohne Reduktionsmittel zur kolloidalen SnO$_2$ . xH$_2$O Lösung A gegeben und die gesamte Lösung wurde

- 16 -

wie im Beispiel 1 24 Stunden lang bestrahlt. Die so erhaltene
tiefschwarze Lösung C wurde mehrere Tage lang dialysiert,
in eine Form gegossen und dann während mehreren Tagen eindunsten gelassen. Man erhielt eine schwarze Gelplatte aus
mit Rh dotiertem $SnO_2$, die innert 5 Stunden auf 320°C erwärmt, 1 Stunde dort belassen und wieder auf Zimmertemperatur
abgekühlt wurde. Diese Gelplatte wurde geschliffen, poliert,
durch Siebdruck mit Elektroden versehen und in Stücke von
2 x 1 x 0,8 $mm^3$ zersägt. Diese Stücke wurden zu vorzüglichen
Gassensoren verarbeitet, deren elektrische Leitfähigkeit sich
linear mit der Wasserstoffkonzentration ändern.

Beispiel 3:
_____

50 ml einer kolloidalen Lösung C von $SnO_2$ . $xH_2O$ + 1 Gew.%
Pt wurden analog wie im Beispiel 1 zubereitet. 2 ml dieser
Lösung C wurden mit 40 ml einer kolloidalen Lösung A von
$SnO_2$ . $xH_2O$, die ebenfalls nach Beispiel 1 hergestellt worden
waren, vermischt, in eine Form gegossen und mehrere Tage bei
Zimmertemperatur eindunsten gelassen. Man erhielt eine transparente, braune Gelplatte, die aus $SnO_2$ . $xH_2O$ + 0,05 Gew.%
Pt bestand. Die Platte wurde innert 2 Stunden auf 550°C erwärmt, bei dieser Temperatur für 3 Stunden belassen und dann
wieder auf Zimmertemperatur abgekühlt. Diese Platte wurde
geschliffen, poliert, mit hochreflektierenden Elektroden versehen und in Stücke von 2 x 2 x 0,5 $mm^3$ zersägt. Diese Gelstücke wurden mit den Elektroden auf beheizbaren Substraten
befestigt und ergaben so Gassensoren, die sowohl für einen
optischen als auch für einen elektrischen Nachweis von reduzierenden oder oxidierenden Gasen benutzt werden konnten.

**Beispiel 4:**

100 ml einer wässerigen Suspension von Titanoxidhydrat, die durch Mischen einer Lösung von 21 g $Ti(O(CH_2)_3CH_3)_4$ in 46,5g Methanol mit 515 g $H_2O$ erhalten worden war, wurde mit 10 ml einer Lösung von 12,7 g Oxalsäuredihydrat in 125 g $H_2O$ unter Umrühren peptisiert. Die klare Lösung A wurde mit 10 ml einer Lösung B von 89 mg Palladium(II)-acetat in 50 ml Methanol versetzt und wie im Beispiel 1 bestrahlt. Man erhielt eine braune Lösung C, die mehrere Stunden lang dialysiert und dann in eine Form gegossen wurde. Die Lösung wurde bei Zimmertemperatur teilweise getrocknet und gelieren gelassen und man erhielt eine tiefschwarze Gelplatte aus mit Pd dotiertem $TiO_2$. Diese Platte wurde innert 30 Stunden auf 250°C erwärmt und dann abkühlen gelassen. Diese Platte wurde geschliffen, poliert, mit Elektroden versehen und dann in Stücke von 0,2 x 0,2 x 0,2 $mm^3$ zersägt. Diese Stücke wurden zu einem vorzüglichen Gassensor verarbeitet, der $H_2$ sehr empfindlich nachweist.

**Beispiel 5:**

3,1 g $Ti(O(CH_2)_3CH_3)_4$ wurden in 7 g Methanol gelöst und zu einer Lösung von 1,4 g Acetylacetonat in 13,4 g $H_2O$ gegeben. Dank dem Acetylacetonat als Chelatbildner wurde eine nur mässig trübe Lösung A erhalten, die durch Zugabe von 1,7 g-konzentrierter Ameisensäure vollkommen klar wurde. 5 ml einer Lösung B von 30 mg Palladium(II)-acetat in 20 ml Methanol wurden zugegeben und dieses Gemisch wie im Beispiel 4 einige Stunden lang bestrahlt. Die so erhaltene dunkelbraune Lösung wurde ohne Dialyse direkt in eine Form gegossen, darin teilweise getrocknet und gelieren gelassen und die so erhaltene schwarze Gelplatte aus mit Pd dotiertem $TiO_2$ wie im Bei-

spiel 4 ausgeheizt, was eine Xerogelplatte mit einer Porosität von 59 Vol% lieferte. Aus dieser Platte wurden Stücke von den Dimensionen 1 x 1 x 0,8 mm$^3$ herausgetrennt. Daraus wurden Gassensoren hergestellt, die sehr empfindlich CO und $H_2$ anzeigen.

Beispiel 6:

75 ml einer tiefschwarzen Lösung C von kolloidalem $SnO_2$, beladen mit Pd, wurden wie im Beispiel 1 hergestellt und dialysiert. Diese Lösung wurde lyophilisiert und man erhielt ein leicht braunweisses, äusserst feines Pulver. Dieses Pulver wurde zu 1 mm dicken Platten mit einem Durchmesser von 10 mm gepresst, mit Elektroden bedampft und zu 1 x 1 x 1 mm$^3$ grossen Stücken zersägt. Diese Stücke wurden zu Gassensoren verarbeitet, die CO und $H_2$ schon bei Zimmertemperatur nachweisen können. Dieses Beispiel zeigt, dass die besonders guten Betriebseigenschaften der Sensorelemente durch nach dem erfindungsgemässen Verfahren erhaltenen Gassensormaterialien bedingt sind. Dies ist auch dann noch der Fall, wenn das Material der Sensorelemente gepresst wird.

In einem anderen Experiment wurden 110 ml einer kolloidalen $TiO_2$-Lösung C, die auf den $TiO_2$-Partikeln photochemisch abgeschiedenes Pd enthielt, wie nach Beispiel 4 hergestellt. Diese Lösung wurde lyophilisiert und das so erhaltene bräunliche Pulver zu Scheiben von 25 mm Durchmesser und 0,8 mm Dicke gepresst. Diese Scheiben wurden mit einer alkoholischen Lösung von $Si(OCH_2CH_3)_4$ getränkt und 4 Stunden lang bei 300°C getrocknet. Dadurch erhielt man sehr stabile, hochporöse Scheiben, die durch Siebdruck mit Elektroden versehen und dann zu Stücken mit den Abmessungen
2 x 2 x 0,8 mm$^3$ zersägt wurden. Daraus wurden Gassensoren
hergestellt, die sehr empfindlich H$_2$ und CO nachweisen
konnten.

Beispiel 7:

60 ml einer Lösung C von kolloidalem SnO$_2$, beladen mit
feinstverteiltem Rh, wurden wie im Beispiel 2 hergestellt.
Diese Lösung wurde lyophilisiert und man erhielt ein braunes, äusserst feines Pulver. Dieses Pulver wurde mit wenig
Methanol zu einem Brei verrührt und in dünner Schicht auf
ein mit Elektroden versehenes, elektrisch isolierendes, flaches Substrat aus Al$_2$O$_3$ aufgestrichen. Dieser Aufstrich wurde bei 50°C getrocknet, mit einer methanolischen Lösung von
Si(OCH$_3$)$_4$ getränkt und anschliessend 4 Stunden lang bei 300°C
getrocknet. Dabei wurde SiO$_2$ ausgeschieden, das die feinen
SnO$_2$-Partikeln zusammenkittete und trotzdem eine poröse
Schicht ergab. Dieser Sensor konnte vorzüglich für den Nachweis von CO bei 80°C verwendet werden.

Beispiel 8:

73 ml einer kolloidalen SnO$_2$-Lösung C, die feinstverteiltes
Pd auf den einige nm Durchmesser aufweisenden SnO$_2$-Partikeln
enthielt, wurden wie im Beispiel 1 hergestellt und lyophylisiert. Das so erhaltene feine Pulver wurde 1 Stunde lang bei
300°C ausgeheizt und zu Würfeln gepresst, deren äussere Masse
2 x 2 x 2 mm$^3$ betrugen und in der Mitte ein rundes Loch von
0,8 mm Durchmesser besassen. Je zwei äussere Flächen eines
solchen Würfels wurden mit einer Elektrode versehen. Dieser
Würfel wurde in einem Mehrfachgassensor verwen-det, der mehrere analoge Würfel mit Mittelloch aus $SnO_2$ enthielt, die aber mit andern Katalysatoren als Pd dotiert waren. Der mit Pd dotierte $SnO_2$-Würfel ist bei einer Betriebstemperatur von 180°C sehr empfindlich gegenüber CO. Die näheren Einzelheiten sind in dem CH-Patent (CH-Pat. Gesuch 4737/83-9) beschrieben.

Beispiel 9:
_____

44 g einer wässerigen Lösung A, die 20 g/Liter kolloidales $SnO_2$ enthielt, wurden wie im Beispiel 1 hergestellt. 18,7 mg $(NH_4)_2RuCl_6$ und 17,4 mg $(NH_4)_2PtCl_4$ wurden in 30 ml $H_2O$ gelöst. Diese Lösung B wurde zur kolloidalen $SnO_2$-Lösung A gegeben und die vereinigten Lösungen wie im Beispiel 1 24 Stunden lang belichtet. Man erhielt eine tiefbraunschwarze Lösung C, die mehrere Tage lang dialysiert und dann in eine Form ausgegossen wurde. Die Lösung wurde bei Zimmertemperatur teilweise getrocknet und dabei gelieren gelassen und man erhielt eine schwarze Platte aus mit Pt und Ru dotiertem $SnO_2$-Gel, die innert 30 Stunden auf 525°C erwärmt und dann wieder abgekühlt wurde. Diese Platte, die nun aus $SnO_2$-Xerogel bestand, das mit Platin und Ruthenium und ihren Oxiden dotiert war, wurde geschliffen, poliert, durch Siebdruck mit Elektroden versehen und zu Stücken der Grösse 1 x 1 x 0,2 $mm^3$ zerschnitten. Diese Stücke wurden zu Gassensoren verarbeitet, die bei einer Betriebstemperatur von 186°C $H_2$ und CO äusserst empfindlich anzeigten.

**Beispiel 10:**

Eine kolloidale Lösung C von mit Pd dotiertem $TiO_2$ wurde wie im Experiment 5 erzeugt und mit soviel Methanol versetzt, dass der Wassergehalt nur noch 50-Vol-% betrug. Diese Lösung wurde in eine Form gegossen und dann mehrere Tage lang eindunsten und gelieren gelassen. Die so erhaltene Gelplatte wurde darauf in mehrfach erneuertes Methanol gelegt und dann zusammen mit Methanol unter Druck soweit erhitzt, dass der kritische Druck und die kritische Temperatur von Methanol überschnitten wurden. Der Druck wurde dann auf Normaldruck gesenkt und anschliessend die Temperatur auf Zimmertemperatur gebracht. Das so erhaltene Aerogel wurde geschliffen, poliert, mit Elektroden versehen und zu Stücken zersägt, die $H_2$ bei 350°C sehr empfindlich nachweisen konnten.

**Beispiel 11:**

4,2 g $Ti(O(CH_2)_3 CH_3)_4$ und 1,4 g Acetylaceton als Chelatbildner wurden in 8,9 g Methanol gelöst und unter Rühren mit 1 ml $H_2O$ versetzt. Die so erhaltene kolloidale $TiO_2$-Lösung A wurde mit 3,2 g einer Lösung B von 25 mg Palladium(II)-acetat in 13 ml Methanol versetzt und wie in Beispiel 1 9 Stunden lang mit Licht bestrahlt. Diese Lösung C wurde ohne Dialyse in eine Form gegossen, darin teilweise eingetrocknet und dadurch geliert. Die so erhaltene Gelplatte wurde darauf innert 10 Stunden auf 300°C gebracht, dort 4 Stunden gehalten und wieder auf Zimmertemperatur gekühlt. Die Platte wurde geschliffen, poliert, mit Elektroden versehen und zu Stücken der Grösse 1 x 1 x 1 $mm^3$ zersägt, die zu Gassensoren verarbeitet wurden, die bei 300°C $H_2$ sehr empfindlich nachweisen konnten.

Beispiel 12:

Eine kolloidale $TiO_2$-Lösung A in Methanol wurde analog zu Beispiel 11 erzeugt und mit einer methanolischen Palladium(II)-acetatlösung B versetzt. Wie in Beispiel 1 wurde das Pd durch UV-Bestrahlung auf den $TiO_2$-Kolloidteilchen abgeschieden. Die so erhaltene Lösung C wurde in eine Form gegeben, darin teilweise getrocknet und so geliert. Die erhaltene Gelplatte wurde zusammen mit Methanol unter Druck soweit erhitzt, dass der kritische Druck und die kritische Temperatur von Methanol überschritten wurden. Der Druck wurde dann auf Normaldruck gesenkt, und anschliessend wurde die Temperatur auf Zimmertemperatur gebracht. Die so erhaltene Platte aus $TiO_2$-Aerogel wurde geschliffen, poliert mit Elektroden versehen und zu Stücken zersägt. Diese Stücke wurden zu Gassensoren verarbeitet, die bei einer Temperatur von 280°C $H_2$, $CH_4$ und CO sehr empfindlich nachweisen konnten.

Patentansprüche

1. Verfahren zur Herstellung von Materialien für Gassensoren, die aus Metalloxiden mit Katalysatorzusätzen bestehen, d a d u r c h   g e k e n n z e i c h n e t, dass eine kolloidale Lösung (A) mindestens eines Metalloxids oder Metallhydroxids eines Metalls aus einer der Gruppen Ib, IIa, IIb, IIIa, IIIb, IVa, IVb, Va, Vb, VIa, VIb, VIIb, VIII und den Lanthaniden und Aktiniden des Periodensystems hergestellt wird, dass diese Lösung (A) mit einer Lösung (B) mindestens eines Salzes oder einer Komplexverbindung der Metalle Lathan, Chrom, Mangan, Eisen, Kobalt, Nickel, Kupfer, Ruthenium, Iridium, Palladium, Platin, Rhodium, Osmium, Silber, Gold, Antimon, Wismut oder Thorium vermischt wird, dass das Gemisch zur photochemischen Abscheidung des Metalls in feinverteilter Form auf dem Metalloxid bzw. Metallhydroxid mit elektromagnetischer Strahlung im Bereich des sichtbaren und ultravioletten Lichts bestrahlt wird und die so erhaltene bestrahlte Lösung (C) ohne wesentliche Aenderung der Grösse der kolloidalen Partikeln aus Metalloxid bzw. Metallhydroxid zu einem Festkörper (D) verarbeitet wird und dass dieser Festkörper (D) bei einer Temperatur, die maximal 700°C, insbesondere maximal 500°C und vorzugsweise maximal 300°C über der vorgesehenen Betriebstemperatur des Gassensor liegt, getrocknet wird.

2. Verfahren gemäss Patentanspruch 1, d a d u r c h   g e k e n n z e i c h n e t, dass die kolloidale Lösung (A) mindestens ein Oxid oder Hydroxid von Beryllium, Magnesium, Calcium, Strontium, Barium, Lanthan, Cer, Thorium, Titan, Zirkon, Vanadin, Niob, Tantal, Chrom, Molybdän, Wolfram, Mangan, Eisen, Kobalt, Nickel, Kupfer, Silber, Zink, Cadmium, Aluminium, Indium, Silicium, Germanium, Zinn, Blei, Antimon oder Wismut enthält.

3. Verfahren gemäss einem der Patentansprüche 1 bis 2, d a d u r c h   g e k e n n z e i c h n e t, dass zur Herstellung der kolloidalen Lösung (A) ein Metallsalz $MX_z$ in wässeriger Lösung durch eine Aenderung der Wasserstoffionenkonzentration hydrolysiert wird, wobei M das gewählte Metall und X das entsprechende Anion symbolisieren.

4. Verfahren gemäss einem der Patentansprüche 1 bis 2, d a d u r c h   g e k e n n z e i c h n e t, dass zur Herstellung der kolloidalen Lösung (A) ein Metallalkoholat $M(OR)_x$ in Lösung durch Wasserzugabe hydrolysiert wird, wobei M das gewählte Metall und OR den Alkoholrest symbolisieren.

5. Verfahren gemäss Patentanspruch 3 oder 4, d a d u r c h   g e k e n n z e i c h n e t, dass vor der Hydrolyse des Metallsalzes oder des Metallalkoholats ein Chelatbildner der Lösung zugesetzt wird.

6. Verfahren gemäss Patentanspruch 1, d a d u r c h   g e - k e n n z e i c h n e t, dass die kolloidale Lösung (A) mindestens eines Oxids oder Hydroxids von Magnesium, Lanthan, Cer, Titan, Zirkon, Vanadin, Chrom, Eisen, Kobalt, Nickel, Kupfer, Zink, Aluminium, Indium oder Zinn mit einer Lösung (B) eines Chlorids, Nitrats, Sulfats, Acetats, Formiats, Acetylacetonats oder Salicylats mindestens eines der Metalle Lanthan, Chrom, Mangan, Eisen, Kobalt, Nickel, Kupfer, Ruthenium, Iridium, Palladium, Platin, Rhodium, Osmium, Silber, Gold, Antimon, Wismut oder Thorium vermischt wird.

7. Verfahren gemäss einem der Patentansprüche 1 bis 6, d a d u r c h   g e k e n n z e i c h n e t, dass die Bestrahlung des Gemischs der Lösungen (A) und (B) mit einer solchen Intensität und zeitlicher Dauer erfolgt, dass mindestens 30%, vorzugsweise 60% oder mindestens 90% des Metallgehaltes der Lösung (B) zum Metall reduziert werden.

8. Verfahren gemäss einem der Patentansprüche 1 bis 7, d a - d u r c h   g e k e n n z e i c h n e t, dass dem Gemisch der beiden Lösungen (A) und (B) ein Reduktionsmittel zugesetzt wird, welches bei der photochemischen Abscheidung eine Erhöhung der Wasserstoffionenkonzentration um nicht mehr als drei Zehnerpotenzen bewirkt.

9. Verfahren gemäss einem der Patentansprüche 1 oder 7, d a - d u r c h   g e k e n n z e i c h n e t, dass dem Gemisch der Lösungen (A) und (B) vor dem Bestrahlen ein Chelatbildner zugesetzt wird.

10. Verfahren gemäss einem der Patentansprüche 8 und 9, d a - d u r c h   g e k e n n z e i c h n e t, dass der Chelatbildner bei der photochemischen Metallabscheidung als Reduktionsmittel dient.

11. Verfahren gemäss einem der Patentansprüche 5, 9 und 10, d a d u r c h   g e k e n n z e i c h n e t, dass der Chelatbildner Oxalsäure, Weinsäure, Zitronensäure, Acetylaceton, Aethylendiamintetraessigsäure, Nitrilotriessigsäure oder Salicysäure ist.

12. Verfahren gemäss einem der Patentansprüche 1 und 7 bis 11, d a d u r c h g e k e n n z e i c h n e t, dass die photochemische Metallabscheidung unter einem Schutzgas durchgeführt wird, wobei das Schutzgas vorzugsweise $N_2$, He, Ar, Ne, Kr, Xe, $H_2$ oder $CO_2$ ist.

13. Verfahren gemäss einem der Patentansprüche 1 bis 12, d a d u r c h g e k e n n z e i c h n e t, dass die kolloidale Lösung (A) und/oder die bestrahlte Lösung (C) durch Dialyse oder Elektrodialyse gereinigt werden.

14. Verfahren gemäss einem der Patentansprüche 1 bis 13, d a d u r c h g e k e n n z e i c h n e t, dass die bestrahlte Lösung (C) lyophilisiert wird und dass das erhaltene Pulver getrocknet wird und im Gemisch mit einem Sinterhilfsmittel auf ein mit Elektroden versehenes Substrat aufgebracht und gesintert wird.

15. Verfahren gemäss einem der Patentansprüche 1 bis 13, d a d u r c h g e k e n n z e i c h n e t, dass die bestrahlte Lösung (C) lyophilisiert wird und dass das erhaltene Pulver zur Entfernung von Lösungsmittel ausgeheizt und dann zu Platten gepresst und gesintert wird.

16. Verfahren gemäss einem der Patentansprüche 1 bis 13, d a d u r c h g e k e n n z e i c h n e t, dass die bestrahlte Lösung (C) lyophilisiert wird, dass das erhaltene Pulver zur Entfernung von Lösungsmittel ausgeheizt und zu Platten gepresst wird, dass die Platten zur Erhöhung der Festigkeit mit einer Lösung einer organischen Silicium-, Titan-, Aluminium- oder Zinnverbindung getränkt und zur Entfernung des Lösungsmittels ein zweites Mal ausgeheizt wird.

17. Verfahren gemäss Patentanspruch 1, d a d u r c h   g e -
k e n n z e i c h n e t , dass die erhaltene kolloidale
Lösung (C) mindestens eines Metalloxides, Metalloxidhydrates oder Metallhydroxides in eine Form gegossen und
mehrere Tage lang bei Zimmertemperatur getrocknet wird,
bis sich ein Festkörper (D) aus hochreinem Metalloxid-,
Metalloxidhydrat oder Metallhydroxidgel bildet und dass
der Festkörper (D) zur Erzeugung von Metalloxidxerogel
mit einer vorbestimmten Porosität und Korngrösse bei Normaldruck und mit einer Ausheizgeschwindigkeit von max.
100°C pro Stunde auf eine Temperatur gebracht, die höchstens 700°C, vorzugsweise höchstens 500°C oder insbesondere höchstens 300°C, höher liegt als die beim späteren
Betrieb des Gassensors angewendete Betriebstemperatur,
und anschliessend auf Zimmertemperatur abgekühlt wird.

18. Verfahren gemäss Patentanspruch 1, d a d u r c h   g e -
k e n n z e i c h n e t , dass die erhaltene kolloidale
Lösung (C) mindestens eines Metalloxides, Metalloxidhydrates oder Metallhydroxides in eine Form gegossen und
mehrere Tage lang bei Zimmertemperatur getrocknet wird,
bis sich ein Festkörper (D) aus hochreinem Metalloxidgel,
Metalloxidhydratgel oder Metallhydroxidgel gebildet hat
und dass der Festkörper (D) zur Erzeugung von Metalloxidaerogel mit einer vorbestimmten Porosität und Korngrösse
mehrere Wochen lang bei Normaldruck und Zimmertemperatur
unter wiederholter Hinzufügung eines organischen Lösungsmittels in einen das organische Lösungsmittel enthaltenden
Festkörper (D) übergeführt und anschliessend mindestens
eine halbe Stunde lang auf einen Druck und eine Temperatur, die für das verwendete Lösungsmittel überkritisch
sind, gebracht wird, worauf der Druck auf Normaldruck gesenkt wird und schliesslich die Temperatur auf Zimmertemperatur gebracht werden.

19. Verfahren gemäss Patentanspruch 1, d a d u r c h   g e -
k e n n z e i c h n e t, dass die erhaltene kolloidale
Lösung (C) mindestens eines Metalloxides oder Metallhydroxides in einem organischen Lösungsmittel in eine Form
gegossen und mehrere Tage lang bei Zimmertemperatur getrocknet wird, bis sich ein Festkörper (D) aus hochreinem
Metalloxidgel, Metalloxidhydratgel oder Metallhydroxidgel
bildet, der das organische Lösungsmittel enthält und dass
der Festkörper (D) zur Erzeugung von Metalloxidaerogel
mit einer vorbestimmten Porosität und Korngrösse mindestens
eine halbe Stunde lang auf einen Druck und eine Temperatur,
die für das organische Lösungsmittel auf Normaldruck gesenkt wird und schliesslich die Temperatur auf Raumtemperatur gebracht wird.

20. Verfahren gemäss Patentanspruch 1, d a d u r c h   g e -
k e n n z e i c h n e t, dass die erhaltene kolloidale
Lösung (C) mindestens eines Metalloxides oder Metallhydroxides in einem organischen Lösungsmittel in eine Form gegossen und mehrere Tage lang bei Zimmertemperatur getrokknet wird, bis sich ein Festkörper (D) aus hochreinem
Metalloxidgel, Metalloxidhydratgel oder Metallhydroxidgel
bildet, der das organische Lösungsmittel enthält und dass
der Festkörper (D) zur Erzeugung von Metalloxidxerogel
mit einer vorbestimmten Porosität und Korngrösse bei Normaldruck und mit einer Aufheizgeschwindigkeit von max.
100°C pro Stunde auf eine Temperatur, die höchstens 700°C, vorzugsweise höchstens 500°C oder insbesondere höchstens 300°C höher liegt als die beim späteren Betrieb des Gassensors verwendete Betriebstemperatur, erhitzt und anschliessend auf Raumtemperatur abgekühlt wird.

21. Verfahren gemäss einem der Patentansprüche 1 und 14 bis 20, d a d u r c h  g e k e n n z e i c h n e t, dass aus den Körpern aus Metalloxidxerogel, Metalloxidaerogel bzw. ausgepresstem Metalloxidpulver Gassensoren in geeigneter Form herausgetrennt werden.